# EUROPEAN PATENT APPLICATION

(11) **EP 3 560 755 A1**
(43) Date of publication of application: **30.10.2019**
(21) Application number: 18168928.2
(22) Date of filing: 24.04.2018
(51) Int. Cl.: B60P 3/10

(54) **TROLLEY FOR A VEHICLE FOR HAULING AND LAUNCHING BOATS**

(71) Applicant: DACHI s.r.l., 12051 Alba (CN) (IT)
(72) Inventor: MARINO, Ferruccio, 12051 ALBA (CN) (IT)
(74) Representative: Robba, Pierpaolo

(57) **Abstract**

Trolley (11) for a vehicle for hauling and launching boats, comprising: a support unit (13) provided with rotatable hubs (65, 67) with which corresponding wheels (21, 23) having substantially coincident rotation axes (S1) are associated; a suspension unit (15), adapted to vary the extension in height of the trolley (11) and comprising a pair of telescopic hydraulic cylinders (33, 35) each extending around a respective longitudinal axis (S2, S3); a cylindrical sleeve (55) housed between the two telescopic hydraulic cylinders (33, 35) and having at least one axial seat (57, 59) in which said support unit (13) is received.

## Description

### Technical Field

The present invention relates to a trolley for a vehicle for hauling and launching boats. More precisely, the invention relates to a trolley having a hydraulic suspension adjustable in height and optionally having hydraulically-controlled steering and/or self-propelling capabilities.

### Prior Art

A vehicle for hauling and launching boats is known for instance from IT-TO20110871 (A). This kind of vehicle generally comprises a frame with longitudinal frame members, which defines a U-shaped structure supported by motor-driven steering trolleys equipped with wheels. In order to allow the vehicle to haul and launch a boat and to adapt itself to variations of the slope of the terrain, the trolleys supporting the frame are equipped with suspensions adjustable in height.

At present, two types of adjustable suspensions are mainly used: a first type, named "pantograph suspension" and substantially referable to the teaching of EP 0 214 563 or EP 2 325 030, and a second type, named "telescopic suspension" and substantially referable to the teaching of IT0001385164 (B).

The pantograph system is particularly expensive, is suitable for heavy loads and has the advantage of ensuring a wide range of displacement between the axis of rotation of the wheels and the frame of the vehicle the trolley is associated with. Yet, with the pantograph system, the up and down displacement of the frame relative to the wheels does not take place along a rectilinear vertical trajectory, and this can give rise to unwanted phenomena of displacement of the frame relative to the wheels during the raising and lowering operations.

The telescopic system is cheaper and has the advantage of ensuring a rectilinear vertical trajectory during the up and down displacement. Yet, the telescopic system allows for a limited displacement range between the wheels and the frame.

In general, trolleys for vehicles for hauling and launching boats have axles carrying wheel pairs, and the wheels are located at opposite ends of the axle.

In known trolleys, especially when the trolley is of the steering type, the problem arises of how to reduce the lever arms generated on each individual wheel associated with the trolley axle during advance and/or steering. Actually, the steering axis about which the trolley rotates during steering generally passes between the two wheels of the trolley, is perpendicular to the axis of rotation of the wheels and, moreover, generally intersects said axis of rotation. Clearly, rotation of the trolley about the steering axis causes rotation of the wheels in opposite directions and, moreover, it can also give rise to side displacements of the frame of the vehicle the trolley is associated with, besides inducing stresses on the wheels and the mechanical members associated therewith. Such phenomena adversely affect the whole structure of the trolley and the wear of the members of the steering gear and of the tyres. Other unwanted forces are transmitted to the trolley wheels because of the movements of the vehicle with which a plurality of trolleys is associated.

In order to overcome such a problem, the trolley wheels are to be configured so that their mutual distance is reduced to a minimum. Yet, such a requirement is in conflict with the existence of the members of the suspension and the members controlling wheel rotation.

It is an object to be attained by the present invention to reduce the unwanted forces which are transmitted to the wheels during the trolley advance and/or during steering.

It is another object of the invention to reduce the distance between the wheels of a trolley for a vehicle for hauling and launching boats to a minimum.

It is a further object of the invention to provide a trolley of the above kind, which is compact and robust.

It is another object to be attained by the invention to avoid the provision of units in the hydraulic circuit of trolley that are capable of hindering the movements, and in particular the steering, of the trolley.

It is a further, but not the last object of the invention to provide a trolley of the above kind, which can be constructed with limited costs so that it is suitable for industrial production.

The above and other objects are achieved with the trolley for a vehicle for hauling and launching boats as claimed in the appended claims.

### Description of the invention

According to the invention, the trolley for a vehicle for hauling and launching boats includes a support unit provided with rotatable hubs with which corresponding wheels having substantially coincident rotation axes are associated. The trolley further includes a suspension unit, adapted to vary the extension in height of the trolley. The suspension unit comprises a pair of telescopic hydraulic cylinders each extending around a respective longitudinal axis. The trolley according to the invention further includes a cylindrical sleeve housed between the two telescopic hydraulic cylinders. The sleeve advantageously has at least one axial seat in which the support unit is received.

In accordance with a preferred embodiment of the invention, the cylindrical sleeve has a longitudinal axis that is substantially coincident with the axis of the hubs and the axis of rotation of the wheels and is oscillatable in a plane that is perpendicular to the plane on which both axes of the two telescopic hydraulic cylinders lie and is parallel to said axes.

When the trolley is a self-propelled trolley, the support unit further includes at least one hydraulic motor received in the at least one axial seat in the sleeve. The motor is associated with one of the hubs of the support unit, to which one of the wheels the trolley is equipped with is attached. Advantageously, said at least one hydraulic motor is capable of causing the rotation of at least one of said wheels and, consequently, the forward and/or back movement of the trolley.

According to the invention, the trolley can be optionally equipped with a steering unit, adapted to control the advancing direction of the trolley.

Preferably, according to the invention the steering unit, if any, and the support unit are arranged substantially at opposite ends of the suspension unit. According to the invention, when the trolley is in its working configuration, i.e. when the trolley wheels are lying on the ground or on a sea floor, the support unit is located below and the steering unit is located above.

The trolley wheels associated with the hubs of the support unit are separated from each other by the suspension unit, which is therefore located between the wheels. Advantageously, according to the invention, the distance between the wheels along their axis of rotation is reduced to a minimum and it is substantially equal to the width, i.e. the transverse extension parallel to the axis of rotation of the wheels, of the suspension unit. A gap is provided between each wheel and the suspension unit located between the wheels, in order to allow oscillation of the axis of rotation of the wheels for enabling the wheels of the trolley to adapt themselves to the variations of the terrain. Said gap, measured parallel to the longitudinal axis of the sleeve, coinciding with the axis of rotation of the wheels when said axis is perpendicular to the plane passing through the longitudinal axes of the telescopic hydraulic cylinders, is substantially reduced to a minimum also depending on the type of terrain, and generally is reduced to few centimetres, typically 2 - 3 cm when the trolley is associated with a vehicle intended for smooth terrains, e.g. concrete or asphalt, and 5 - 10 cm when the trolley is associated with a vehicle intended for rough terrains, e.g. a dirt road.

The hydraulic cylinders of the suspension unit have an external body and a rod slidable inside the external body. The rod has therefore a smaller diameter than the respective external body. The at least two hydraulic cylinders have parallel axes and are arranged at a distance from each other (from one another), in particular in order to give robustness and stability to the trolley. A gap or window is defined between the axes of the telescopic hydraulic cylinders and it allows receiving, without giving rise to interference with the other units of the trolley, the ducts of the hydraulic circuit supplying the driving members of the trolley belonging to the support unit.

The two hydraulic cylinders are preferably connected to each other by a transverse connecting plate preferably arranged at the upper end of the hydraulic cylinders in correspondence of the respective top closing wall. The plate is fastened to said closing walls by means of bolts, or by welding or other known means. Said connecting plate is moreover located in a plane substantially perpendicular to the longitudinal axes of the telescopic hydraulic cylinders. The longitudinal axis of the sleeve is therefore substantially oscillatable in a plane perpendicular to the plane on which the connecting plate lies.

Always according to the invention, the distance between the rods of the hydraulic cylinders, measured in perpendicular direction to both cylinder axes, is preferably substantially equal to the external diameter of the sleeve. Advantageously, in this manner, the sleeve has a compact size.

Preferably, the seats for the supporting unit in the sleeve are substantially bell-shaped and, always preferably, they communicate with each other and thus substantially define a single axial seat passing right through the sleeve.

According to the invention, both wheels are preferably motor-driven. In the alternative, a single motor could be provided, and a first wheel could be motor-driven and a second wheel could be supported by an idle rotatable hub received within one of the seats in the sleeve; in the alternative, both hubs could be idly associated with the support unit.

When both wheels are motor driven, each of the seats in the sleeve internally receives a corresponding one of the hydraulic motors associated with a respective wheel of the trolley. Each hydraulic motor is associated with a respective hub for a corresponding wheel of the trolley, and the axes of rotation of the hubs are coaxial and substantially coinciding with the longitudinal axis of the sleeve and the axis of rotation of the wheels.

Advantageously, arranging the sleeve between the telescopic hydraulic cylinders and providing the seats in the sleeve for the hydraulic motors allows reducing the mutual distance between the wheels of the trolley to a minimum.

Advantageously, according to the invention, the seats in the sleeve, or the single through seat, when provided, further communicate with the outside, and preferably with the gap provided between the hydraulic cylinders, through at least one radial slit. Advantageously, the hydraulic ducts connecting the motors to the hydraulic circuit of the trolley are connected to said motors inside the seats in the sleeve, and they come out through the slits towards the outside and towards the gap, if any. Advantageously, the plate has an axial opening allowing said ducts to longitudinally pass through the trolley along a direction substantially parallel to the steering axis of the trolley and in proximity of said axis. Preferably, said steering axis is parallel to and coplanar with the axes of the telescopic hydraulic cylinders and is substantially equidistant therefrom.

Advantageously, thanks to such a feature, the ducts of the hydraulic circuit supplying the motors are prevented from interfering with the trolley units during trolley steering and/or as the trolley height varies due to the variation of the extension of the hydraulic cylinders and/or during oscillation of the oscillating sleeve.

A plurality of trolleys according to the invention can be advantageously associated with a vehicle for hauling and launching boats, for instance made in accordance with the prior art and comprising a frame supported, relative to ground, by a plurality of trolleys adjustable in height, which possibly are self-propelled and/or steering.

When the trolleys are equipped with a steering unit, the wheels can be oriented so that they make the vehicle equipped with the trolleys advance or move back along rectilinear directions, even mutually perpendicular, or along a curved trajectory. The steering unit, when provided, preferably comprises a gear ring fastened to the trolley and to which the force causing rotation of the trolley around its own steering axis is applied. Advantageously, said force can be applied by means of transmission units, such as a toothed rack or gears, controlled by actuators, preferably hydraulic actuators connected to the hydraulic circuit of the vehicle. Preferably, the gear ring is fastened to a bushing rotatably supported in the vehicle frame and fastened in turn to the supporting plate. Advantageously, the gear ring and the bushing are axially open to allow the passage of the hydraulic ducts housed in the gap between the hydraulic cylinders of the suspension unit.

### Brief Description of the Figures

Some preferred embodiments of the invention will be described by way of nonlimiting example with reference to the accompanying Figures, in which:
- Fig. 1 is a side view of a trolley made in accordance with a preferred embodiment of the invention;
- Fig. 2 is a front view of the trolley shown in Fig. 1;
- Fig. 3 is a sectional view according to plane III - III in Fig. 2;
- Fig. 4 is an exploded view of the trolley shown in Fig. 1;
- Fig. 5 is a sectional view according to plane V - V in Fig. 1;
- Fig. 6 is a partial view of a vehicle for hauling and launching boats having a plurality of trolleys as shown in Fig. 1;
- Fig. 7 is a view showing the mechanism controlling steering of the trolley shown in Fig. 1, in accordance with a preferred embodiment of the invention;
- Fig. 8 is a sectional view, similar to Fig. 5, of a trolley equipped with a single hydraulic motor.

In all Figures, the same reference numerals have been used to denote equal or functionally equivalent components.

### Description of some Preferred Embodiments of the Invention

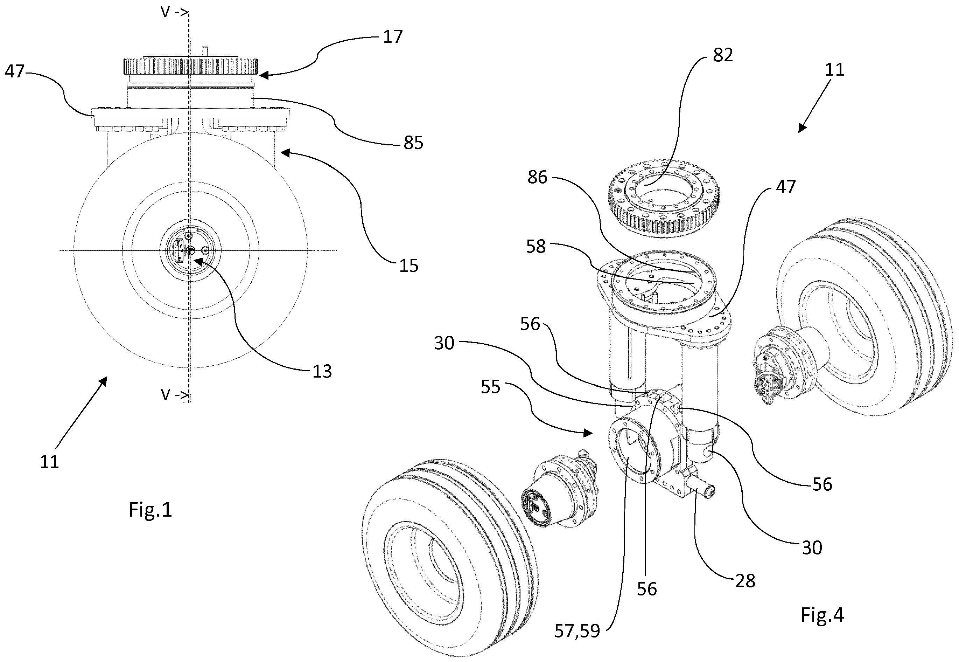

Referring to Fig. 1, a trolley 11 for a vehicle for hauling and launching boats is shown, in accordance with a preferred embodiment of the invention according to which trolley 11 is motor driven and steering.

Trolley 11 illustrated comprises a motor-driven support unit 13, adapted to make trolley 11 move forward and/or back, a suspension unit 15, adapted to vary the extension in height, i.e. the range, of trolley 11, and a steering unit 17, adapted to control the advancing direction of trolley 11 and consequently of the vehicle the trolley is associated with. In the embodiment illustrated, support unit 13 and steering unit 17 are moreover arranged substantially at opposite ends of suspension unit 15.

In Fig. 1 trolley 11 is shown in its working configuration, i.e. with support unit located below and steering unit 17 located above.

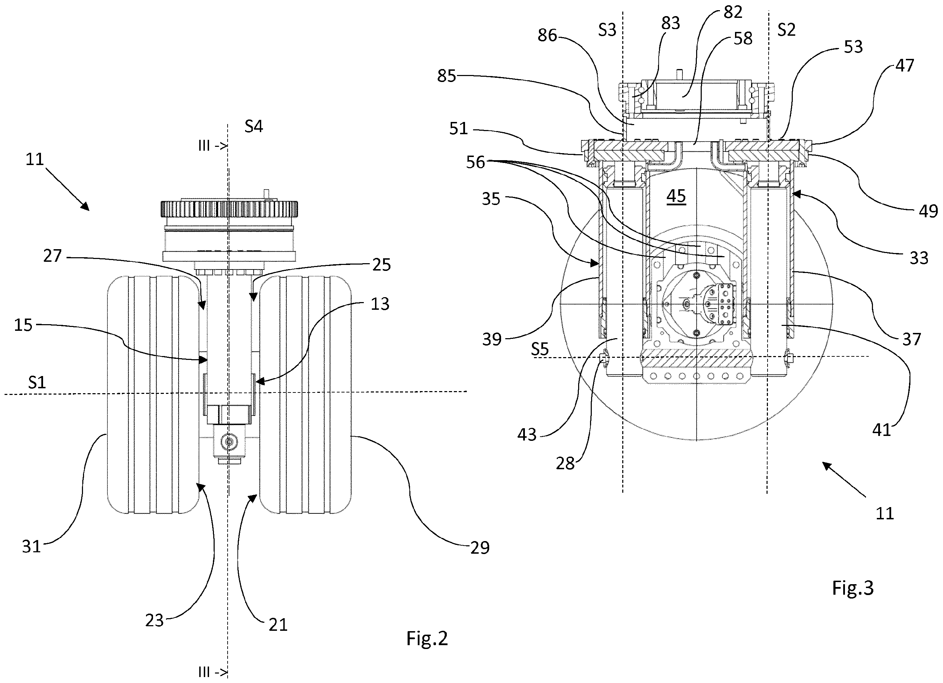

As it can be better appreciated from Fig. 2, trolley 11 has a pair of wheels 21, 23 associated with support unit 13. Moreover, wheels 21, 23 are separated by suspension unit 15 and therefore each of them is adjacent to a respective one of the opposite sides of said suspension unit 15.

Referring now to Fig. 3, suspension unit 15 comprises a pair of telescopic hydraulic cylinders 33, 35. Hydraulic cylinders 33, 35 have an external body or casing 37, 39 and a rod 41, 43. Rod 41, 43 is slidable inside external body 37, 39 and has therefore smaller diameter than the respective external body. Hydraulic cylinders 33, 35 have parallel axes S2, S3. In the preferred embodiment illustrated, axes S2, S3 are spaced apart from each other so as to define a gap 45 therebetween. In Fig. 3, hydraulic cylinders 33, 35 are shown with rods 41, 43 completely retracted within external body 37, 39. Such an arrangement corresponds to the configuration of minimum vertical extension of trolley 11.

Trolley 11 includes a transverse connecting plate 47 connecting the two hydraulic cylinders 33, 35 with each other. Connecting plate 47 is arranged at the upper ends of hydraulic cylinders 33, 35, in correspondence of the respective top closing wall 49, 51, and is fastened to said top closing walls 49, 51 by means of bolts 53.

In accordance with the preferred embodiment of the invention illustrated here, connecting plate 47 is located on a plane substantially perpendicular to axes S2, S3 of telescopic hydraulic cylinders 33, 35.

As it can be better seen in the exploded view of Fig. 4, hydraulic cylinders 33, 35 are fixedly associated at their bottom ends with a transverse cylindrical sleeve 55, the longitudinal axis of which is oscillatable in a plane that is substantially perpendicular to the plane on which axes S2, S3 of both hydraulic cylinders 33, 35 lie and that is parallel to said axes S2, S3.

The longitudinal axis of sleeve 55 is therefore oscillatable in a plane that is substantially perpendicular to the plane on which connecting plate 47 lies.

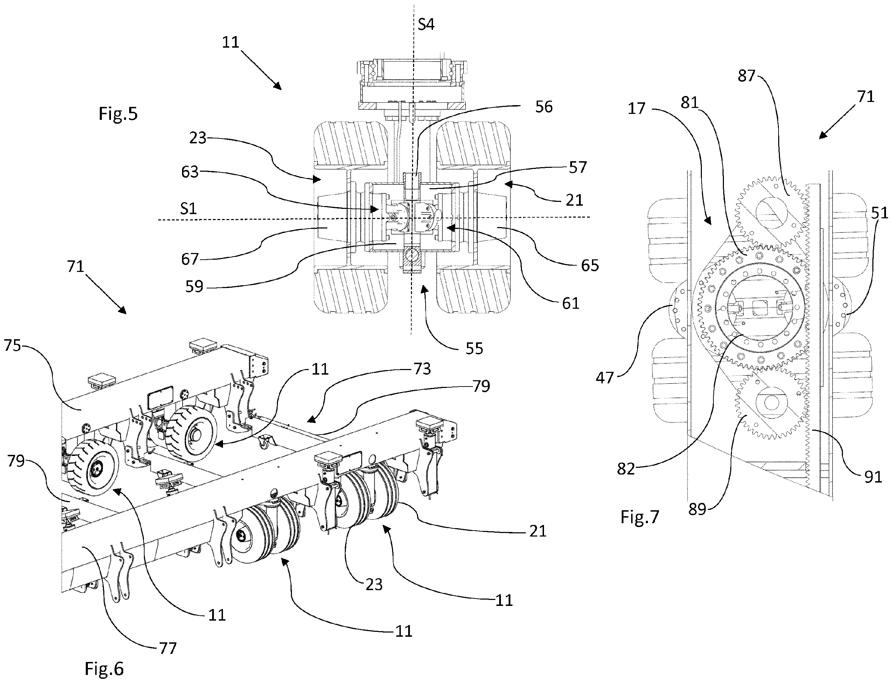

Referring also to Fig. 5, sleeve 55 is advantageously located between the two hydraulic cylinders 33, 35 and internally has a pair of seats 57, 59 for a pair of hydraulic motors 61, 63. Seats 57, 59 are axially open towards the outside on opposite sides of sleeve 55 and are substantially bell-shaped. Moreover, in in the embodiment illustrated, seats 57, 59 communicate with each other and thus substantially define a single axial seat passing right through sleeve 55. Each seat 57, 59 internally houses a corresponding one of hydraulic motors 61, 63. Each hydraulic motor 61, 63 has a respective hub 65, 67 for transmitting motion from the motor to a corresponding wheel 21, 23 of trolley 11. The axes of rotation of hubs 65, 67 are coaxial with each other and substantially coincide with the longitudinal axis of sleeve 55 and with axis of rotation S1 of wheels 21, 23.

Advantageously, according to the invention, the distance between wheels 21, 23 along their axis of rotation S1 is reduced to a minimum, and it is substantially equal to the width, i.e. the transverse extension parallel to axis of rotation S1, of suspension unit 15. A gap 25, 27 is provided between wheels 21, 23, respectively, and unit 15 in order to allow the oscillatory movement of axis of rotation S1 about an axis of rotation S5 passing through a pin 28, which is fastened to the base of the sleeve and the ends of which are received in respective seats 30 formed in rods 41, 43 of hydraulic cylinders 33, 35. The oscillatory movement of sleeve 55 is preferably limited in order to prevent tyres 29, 31 of wheels 21, 23 from interfering with unit 15. Said gap 25, 27 is generally reduced to a few centimetres, and in the example illustrated it is about 2 - 3 cm when the trolley is associated with a vehicle intended for smooth terrains, e.g. concrete or asphalt, and 5 - 10 cm when the trolley is associated with a vehicle intended for rough terrains, e.g. a dirt road.

Moreover, seats 57, 59 in sleeve 55 communicate with the outside and, more particularly, in the example illustrated, with gap 45 provided between hydraulic cylinders 33, 35, through at least one radial slit 56. Advantageously, the hydraulic ducts (not shown) connecting motors 61, 63 to the hydraulic circuit of trolley 11 and hence to the hydraulic circuit of vehicle, are connected to said motors inside seats 57, 59, and they come out through slits 56 towards gap 45. Advantageously, moreover, plate 47 has an axial opening 58 allowing said ducts to longitudinally pass through trolley 11 along a direction substantially parallel to steering axis S4 of trolley 11 and in proximity of said axis. Preferably, said axis S4 is parallel to and coplanar with axes S2, S3 of telescopic hydraulic cylinders 33, 35 and is substantially equidistant therefrom.

Advantageously, thanks to such a feature, the ducts of the hydraulic circuit supplying motors 61, 63 are prevented from interfering with the units of trolley 11 during steering of trolley 11 and/or as the height of trolley 11 varies due to the variation of the length of hydraulic cylinders 33, 35.

Referring to Fig. 6, a vehicle 71 for hauling and launching boats is shown, incorporating a plurality of trolleys 11 made in accordance with the preferred embodiment of the invention. Vehicle 71 is partially shown, since it is part of the art known to the person skilled in the art. The embodiment of vehicle 71 is moreover to be intended as an example only, since said vehicle 71 can have a multiplicity of different forms, in accordance with the knowledge the person skilled in the art. Vehicle 71 illustrated includes a frame 73 made of strong longitudinal beams 75, 77 mutually connected by transverse elements 79. Frame 73 is supported, relative to ground, by a plurality of trolleys 11 made in accordance with the invention. Trolleys 11 associated with vehicle 71 are equipped with support unit 13, suspension unit 15 and steering unit 17. In Fig. 6, trolleys 11 associated with beam 75 are oriented with axis of rotation S1 of wheels 21, 23 perpendicular to the longitudinal axis of vehicle 71, i.e. wheels 21, 23 of those trolleys 11 are oriented so as to make vehicle 71 advance or move back along a substantially longitudinal direction. Trolleys 11 associated with the second beam 77 are instead oriented with axis of rotation S1 of the respective wheels 21, 23 parallel to the longitudinal axis of vehicle 71, and consequently wheels 21, 23 of the latter trolleys 11 are oriented so as to make vehicle 71 advance or move back along a substantially transverse direction. In a known manner, by suitably combining the orientations of axes of rotation S1 of wheels 21, 23 of trolleys 11 it is possible to make vehicle 71 advance in the desired direction, either a rectilinear or a curved direction.

As it can be better appreciated from Fig. 7, steering unit 17 of trolley 11 according to the invention includes a gear ring 81 to which the force causing rotation of trolley 11 around its own steering axis S4 is applied. Referring also to Fig. 3, gear ring 81 is fastened, by means of bolts passing through holes 83 formed in gear ring 81, to a bushing 85 rotatably received in a seat, not shown, formed in the corresponding beam 75, 77 carrying trolley 11. Advantageously, gear ring 81 and bushing 85 have a respective axial opening 82, 86 intended to allow the passage of the hydraulic ducts housed in gap 45 provided between hydraulic cylinders 33, 35 of the suspension unit.

In a preferred embodiment of the invention, the force causing steering of trolley 11 around its own steering axis S4 is applied by means of a pair of gears 87, 89 meshing with the teeth of gear ring 81. Gears 87, 89 are in turn made to rotate by means of a toothed rack 91. The teeth of toothed rack 91 mesh with gears 87, 89. The longitudinal linear movement of toothed rack 91 causes rotation of gears 87, 89 and hence rotation of gear ring 81 associated with plate 47 of trolley 11 through bushing 85. The translational movement of toothed rack 91 is preferably imparted by a hydraulic actuator.

In accordance with a variant embodiment of the invention, the force causing steering of trolley 11 around its own steering axis S4 is directly applied by means of a toothed rack of which the teeth mesh with the teeth of gear ring 81.

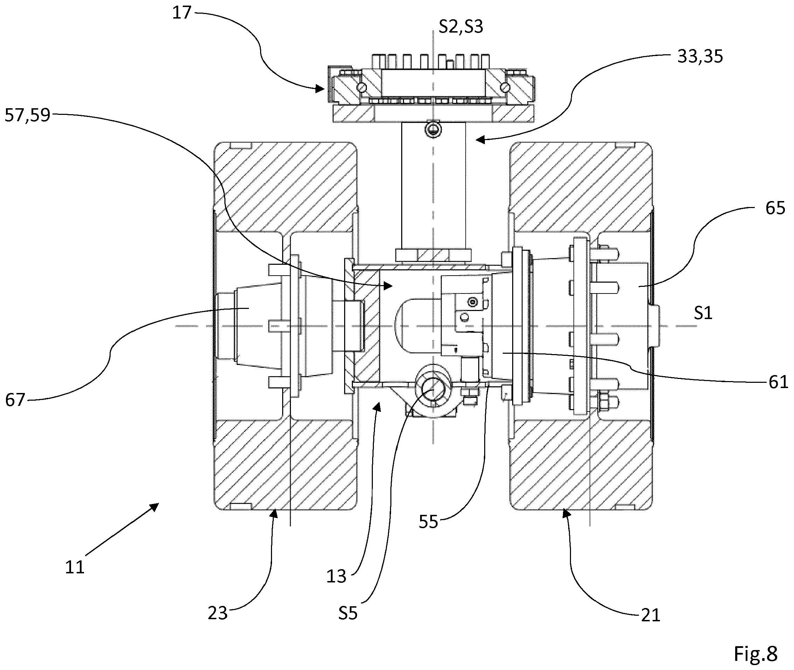

Referring to Fig. 8, a trolley 11 according to a variant embodiment of the invention is shown, where axial seat 57, 59 in sleeve 55 houses a single hydraulic motor 61. In that variant embodiment, one of wheels 21, 23 of trolley 11 (wheel 21 in the example illustrated) is therefore motor driven by hydraulic motor 61, whereas the second wheel (wheel 23 in the example illustrated) is idle and is supported by hub 67. This variant embodiment can therefore be cheaper, since it uses a single hydraulic motor, indifferently coupled with either wheel 21, 23 of the wheel pair.

The trolley as described and shown can undergo several variants and modifications falling within the same inventive principle.

## Claims

1. Trolley (11) for a vehicle for hauling and launching boats, comprising:
- a support unit (13) provided with rotatable hubs (65, 67) with which corresponding wheels (21, 23) having substantially coincident rotation axes (S1) are associated;
- a suspension unit (15), adapted to vary the extension in height of the trolley (11) and comprising a pair of telescopic hydraulic cylinders (33, 35) each extending around a respective longitudinal axis (S2, S3);
- a cylindrical sleeve (55) housed between the two telescopic hydraulic cylinders (33, 35) and having at least one axial seat (57, 59) in which said support unit (13) is received.

2. Trolley according to claim 1, wherein said cylindrical sleeve (55) is oscillatable around a transverse axis (S5) and wherein the longitudinal axis of the sleeve (55) is substantially coincident with the rotation axis (S1) of the wheels (21, 23) and is oscillatable in a plane that is perpendicular to the plane on which both axes (S2, S3) of the two telescopic hydraulic cylinders (33, 35) lie and parallel to said axes (S2, S3).

3. Trolley according to claim 1 or 2, wherein the support unit (13) comprises at least one hydraulic motor (61, 63) received in said at least one axial seat (57, 59) and associated with a corresponding hub (65, 67) of the support unit (13) to which a corresponding one of said wheels (21, 23) is attached and wherein said at least one hydraulic motor (61, 63) is adapted to cause rotation of at least one of said wheels (21, 23) and, consequently, the forward and/or back movement of the trolley (11).

4. Trolley according to claim 1 or 2 or 3, wherein there is further provided a steering unit (17), adapted to control the advancing direction of the trolley (11), said steering unit comprising a gear ring (81) to which the force causing rotation of the trolley (11) around its own steering axis (S4) is applied by means of a pair of gears (87, 89) engaging the teeth of the gear ring (81), said gears (87, 89) in turn being rotated by the translational movement of a toothed rack (91).

5. Trolley according to claim 4, wherein the support unit (13) and the steering unit (17) are arranged substantially at opposite sides of the suspension unit (15) and wherein, when the trolley (11) is in its working configuration, lying on the ground or on a sea floor, the support unit (13) is situated below and the steering unit (17) is situated above.

6. Trolley according to any of the preceding claims, wherein a transverse connecting plate (47) is provided, arranged at one of the ends of the telescopic hydraulic cylinders (33, 35) and located on a plane substantially perpendicular to the axes (S2, S3) of the telescopic hydraulic cylinders (33, 35).

7. Trolley according to claim 6, wherein the trolley (11) comprises a steering axis (S4) parallel to and coplanar with the axes (S2, S3) of the telescopic hydraulic cylinders (33, 35) and substantially equidistant from said axes (S2, S3).

8. Trolley according to claim 2, wherein said wheels (21, 23) are separated from each other by the suspension unit (15) and are each adjacent to one of the opposite sides of said suspension unit (15), a gap (25, 27) being provided between each wheel (21, 23) and the suspension unit (15) for allowing the oscillatable sleeve (55) to oscillate without the wheels interfering with the suspension unit (15), the minimum width of said gap, measured in parallel to the rotation axis (S1) of the wheels, being smaller than 10 cm when said rotation axis is perpendicular to the plane passing through the longitudinal axes (S2, S3) of the telescopic hydraulic cylinders (33, 35).

9. Trolley according to claim 3, wherein the seats (57, 59) of the sleeve (55) communicate with the outside of the sleeve through at least one radial slit (56), said at least one radial slit (56) being provided for the passage of the hydraulic ducts connecting the at least one hydraulic motor (61, 63) housed in the sleeve (55) to the hydraulic circuit of the trolley (11).

10. Vehicle (71) for hauling and launching boats, comprising a plurality of trolleys (11) made in accordance to any of the claims 1 to 9.
